# EUROPÄISCHE PATENTSCHRIFT

(11) **EP 1 133 195 B1**
(45) Veröffentlichungstag und Bekanntmachung des Hinweises auf die Patenterteilung: **28.06.2006**
(21) Anmeldenummer: 00104814.9
(22) Anmeldetag: 06.03.2000
(51) Int. Cl.: H04Q 3/00

(54) **Signalisierungs-System, Verfahren zur Signalisierung und Anordnung von wenigstens zwei Zeichengabepunkten mit solchen Signalisierungs-Systemen zur Einsparung von Übertragungsstrecken**
Signalling system, method of signalling and arrangement of at least two signalling points with such signalling systems to save on transmission paths
Système et procédé de signalisation, ainsi qu'arrangement d'au moins deux points de signalisation avec des tels systèmes de signalisation pour économiser sur les voies de transmission

(43) Veröffentlichungstag der Anmeldung: 12.09.2001
(73) Patentinhaber: SIEMENS AKTIENGESELLSCHAFT, 80333 München (DE)
(72) Erfinder: Gradischnig, Klaus D., 82131 Gauting (DE)

(56) Entgegenhaltungen:
- EP-A- 0 582 418
- US-A- 5 481 673
- MURPHY B P ET AL: "INTERCONNECTING SIGNALING NETWORKS" PROCEEDINGS OF THE NATIONAL COMMUNICATIONS FORUM, 2. Oktober 1989 (1989-10-02), XP000220410

## Beschreibung

Im Zeichengabesystem Nummer 7 (ZGS7) wird ein Zeichengabepunkt (Signalisierungspunkt) durch eine Adresse, den sogenannten Signallingpointcode identifiziert. Weiters werden in der ITU-T Empfehlung Q.704 vier unterschiedliche Adreßräume, d.h. Zeichengabenetze (im weiteren bloß auch Netz oder Netzwerk genannt), für Zeichengabepunkte definiert.

Praktische Beispiele solcher Zeichengaben sind aus dem Stand der Technik bekannt. Zum Beispiel ist US-A-5 481 673 darauf gerichtet, "Cluster Routing" von Nachrichten gemäß in Tabellen gespeicherten Informationen über direkte Strecken zu einem Zielknoten sowie indirekte Strecken zu anderen Zielknoten im gleichen "Cluster" auszuführen. Andererseits bezieht sich MURPHY B P et al: "Interconnecting Signaling Networks" PROCEEDINGS OF THE NATIONAL COMMUNICATIONS FORUM, 2. Oktober 1989 (1989-10-02), XP000220410 auf die Anpassung des SS7-Zeichengabensystems an die nordamerikanische ANSI-Spezifizierung für EA/MF-Signalisierung. Im EP-A-0 582 418 wird eine Erweiterung des SS7-Zeichengabensystems vorgeschlagen, um die Zuordnung zwischen einem Zeichengabestreckenbündel und der Zuweisung einer Übertragungstrecke zu identifizieren.

Der Signallingpointcode wird als Ziel- bzw. Ursprungsadresse in Signalisierugnsnachrichten verwendet. In einer Nachricht wird ferner durch einen sog. Netzwerkindikator NI bestimmt, auf welchen Adreßraum sich die in der Nachricht enthaltenen Ursprungs- und Zieladresse beziehen. Normalerweise gehört eine Zeichengabestrecke bzw. ein Zeichengabestreckenbündel genau einem Zeichengabenetz an. Für Zeichengabeknoten, welche sich logisch gesehen in mehreren Netzen befinden (d.h. welche mehrere Netze bedienen), erweist es sich jedoch von Vorteil, wenn solche Zeichengabeknoten durch eine gemeinsame Zeichengabestrecke bzw. ein gemeinsames Zeichengabestreckenbündel miteinander verbunden werden können, speziell dann, wenn der Verkehr in den einzelnen Zeichengabenetzen zwischen den beiden Zeichengabepunkten eher gering ist oder z.B. die Zeichengabestrecken und Zeichengabestreckenbündel zwischen den beiden Zeichengabepunkten nur im Falle von Ersatzschaltungen bei Ausfall anderer Zeichengabewege verwendet werden. Obwohl nicht in Q.704 beschrieben, werden solche gemeinsamen Zeichengabestreckenbündel bereits regelmäßig eingesetzt. Dabei ist es jedoch erforderlich, daß die Zeichengabenetze, welche sich eines solchen gemeinsamen Zeichengabestrecken bzw. Zeichengabestreckenbündels bedienen, unterschiedliche NI verwenden.

Der Erfindung liegt die Aufgabe zugrunde, die Verwendung gemeinsamer Zeichengabestrecken bzw. Zeichengabestreckenbündel zu ermöglichen, ohne daß die betroffenen Zeichengabenetze unterschiedliche NI verwenden.

Diese Aufgabe wird durch die Erfindung gelöst.

Im folgenden wird die Erfindung mithilfe der Zeichnung näher erläutert, wobei die Zeichnung fünf Figuren umfaßt.

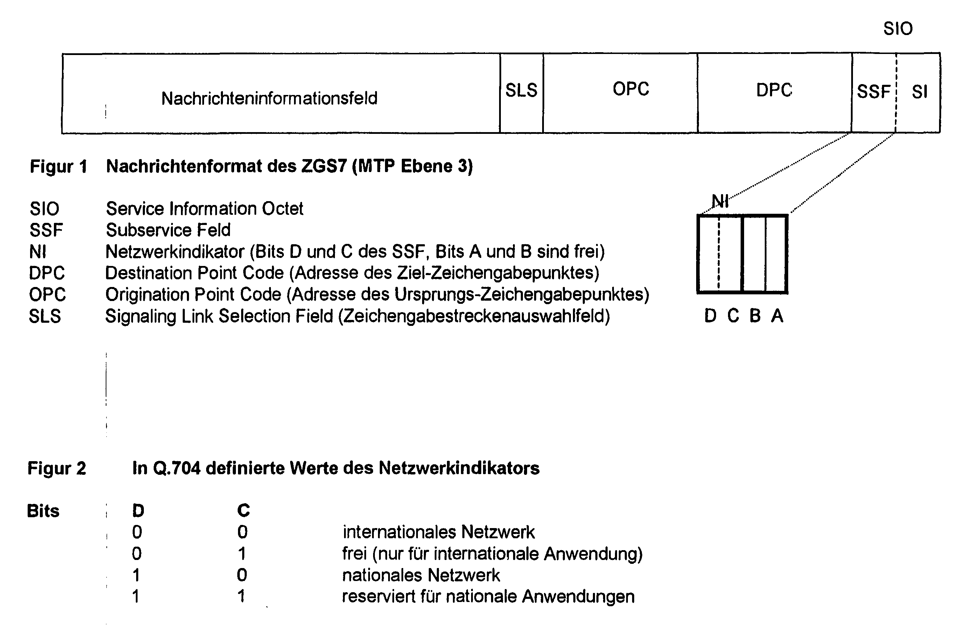

Im Zeichengabesystem Nummer 7 (ZGS7) wird ein Zeichengabepunkt durch eine Adresse, den sogenannten Signallingpointcode identifiziert. Weiters werden in ITU-T Empfehlung Q.704 vier unterschiedliche Adreßräume bzw. Zeichengabenetze für Zeichengabepunkte definiert. Innerhalb einer Nachricht wird durch den sog. Netzwerkindikator NI bestimmt, auf welchen Adreßraum sich die in der Nachricht enthaltenen Ursprungs- und Zieladresse beziehen (siehe Figur 1).

Der NI ist Teil eines sog. Subservice Feldes SSF. Mit einer Länge von 2 Bit kann der NI 4 unterschiedliche Werte annehmen und damit 4 unterschiedliche Adreßräume definieren, von denen ursprünglich im wesentlichen 2 verwendet wurden, einer für das nationale und ein anderer für das internationale Zeichengabenetz. Von den beiden verbleibenden NI Werten ist einer für internationale Anwendungen reserviert. Der andere steht für nationale Anwendungen zur Verfügung (Figur 2). Ferner gibt es neben dem NI zwei zusätzliche Bits (Figur 1) im Subservice Feld, welche international und in vielen nationalen Zeichengabenetzen nicht benutzt werden. In nationalen Zeichengabenetzen könnten damit in einer Nachricht bis zu 8 unterschiedliche Adreßräume, d.h. Zeichengabenetze identifiziert werden. Unter Vernachlässigung einer Kompatibilität mit etwaigen zukünftigen Entwicklungen für das internationale Zeichengabenetz könnte man sogar insgesamt bis zu 16 Zeichengabenetze identifizieren.

Andererseits ist bekannt, daß die in Q.704 definierten Prozeduren keine explizite Verwendung für den NI haben, sondern daß er höchstens dafür verwendet wird, eine erhaltene Nachricht dem richtigen Adreßraum bzw. Zeichengabenetz zuzuordnen. Hält man sich an die in Q.704 beschriebenen Prozeduren, ist jedoch klar, daß eine Zeichengabestrecke bzw. ein Zeichengabestreckenbündel ohne zusätzliche Festlegungen nur einem Zeichengabenetz angehören kann. Daher kann man unter diesen Voraussetzungen in einem Zeichengabeknoten eine eindeutige Zuordnung der Zeichengabestrecken bzw. Zeichengabestreckenbündel zu einem Adreßraum vornehmen, indem man festlegt, daß eine auf einer bestimmten Zeichengabestrecke bzw. auf einem bestimmten Zeichengabestreckenbündel erhaltene Nachricht einem bestimmten Adreßraum zugeordnet wird. Umgekehrt wird beim Aussenden einer Nachricht der Nachricht der dem Netzwerk entsprechende NI zugeteilt. Dieses Konzept wird auch als Multiple-Network-Konzept bezeichnet. Bei den auf der Basis dieses Konzepts in einem Zeichengabepunkt verwaltbaren Netzwerken kann es sich z.B. um die Signalisierungsnetze von Kommunikationsnetzen unterschiedlicher Betreiber oder unterschiedlicher Technologie, z.B. Breiband oder Schmalband, sowie um nationale bzw. internationale Signalisierungsnetzwerke handeln). Dabei wird einer in einem Zeichengabepunkt ankommenden Nachricht anhand der Zeichengabestrecke bzw. des Zeichengabestreckenbündels eine interne Netzwerkidentität zugeordnet. Bevor umgekehrt eine Nachricht ausgesendet wird, wird sie mit dem entsprechenden NI versehen. Dabei können nun Nachrichten unterschiedlicher Netze durchaus durch identische NI gekennzeichnet werden. Jedes (interne) Netzwerk ist dabei logisch vollkommen von den anderen Netzwerken getrennt, d.h. die Adreßräume sind voneinander unabhängig.

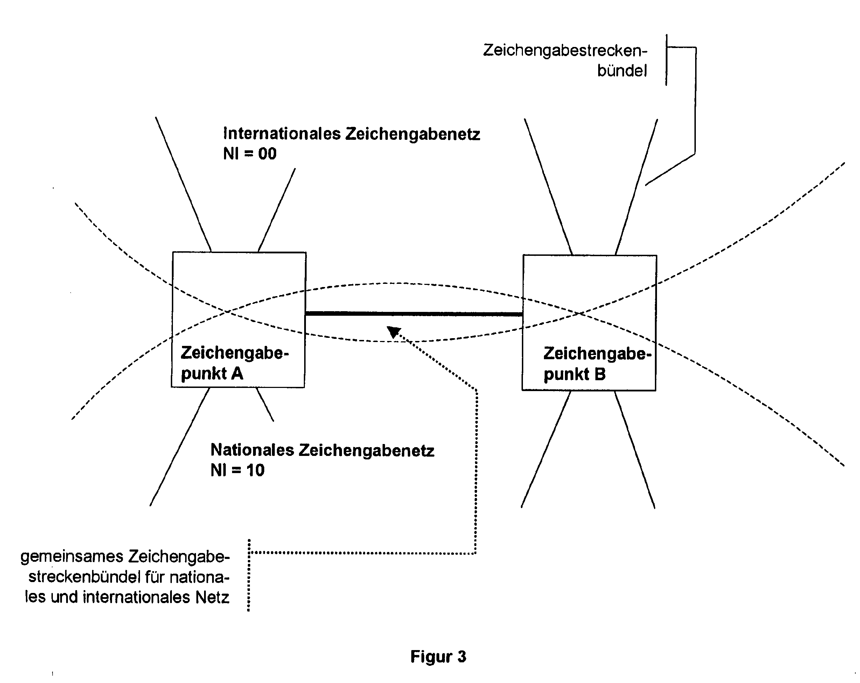

Wenn man nun umgekehrt die in der Q.704 fehlenden zusätzlichen Festlegungen für die Verwendung einer Zeichengabestrecke bzw. eines Zeichengabestreckenbündels in mehreren Netzen vernachlässigt (es bereitet keine besonderen Schwierigkeiten, sie zu treffen, was jedoch nicht Gegenstand dieser Erfindung ist), ist einzusehen, daß man Nachrichten, welche zu unterschiedlichen Adreßräumen gehören, welche unterschiedliche NI verwenden, durchaus über eine und dieselbe Zeichengabestrecke bzw. ein und dasselbe Zeichengabestreckenbündel senden kann, ohne die richtige Zuordnung von Nachricht zu Adreßraum zu verlieren. Anders formuliert, eine Zeichengabestrecke bzw. ein Zeichengabestreckenbündel kann zwei Zeichengabepunkte gleichzeitig in unterschiedlichen Zeichengabenetzen verbinden, solange die Netze unterschiedliche NI verwenden. Dies kann von beträchtlichem Nutzen sein, wenn z.B. zwei Zeichengabepunkte sowohl im nationalen als auch im internationalen Zeichengabenetz miteinander verbunden werden sollen (Figur 3), da man damit wertvolle Resourcen einsparen kann.

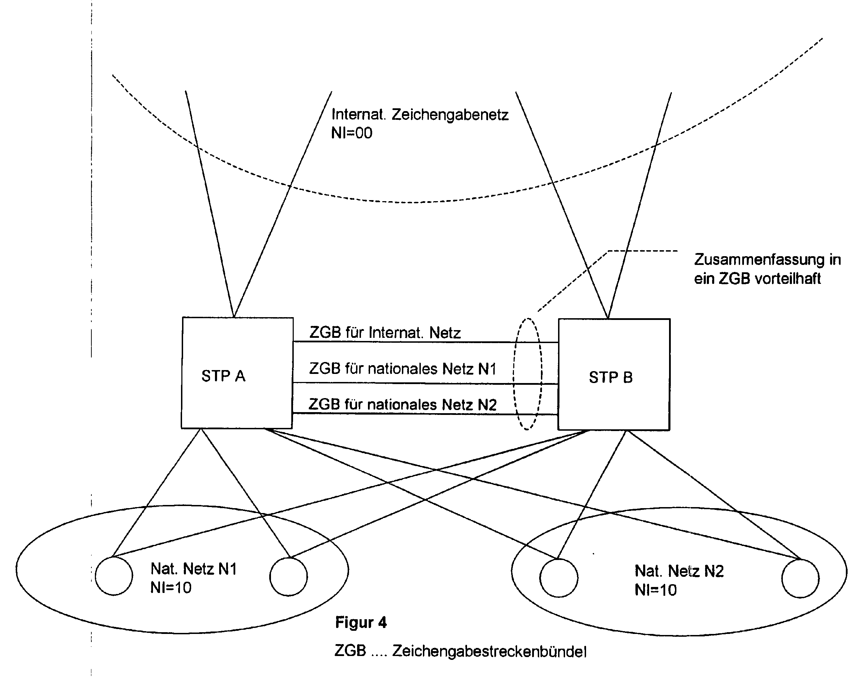

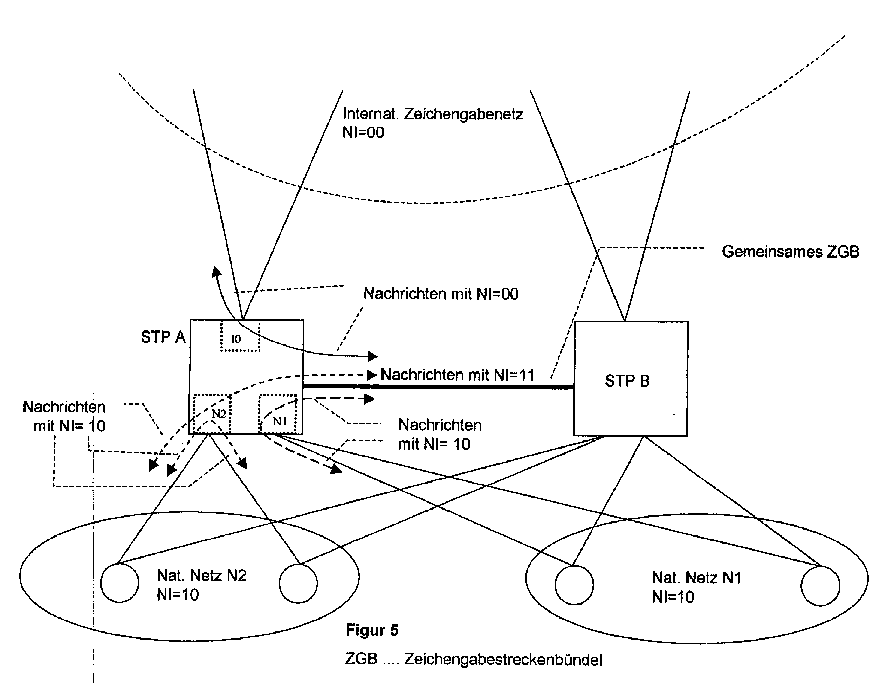

In der Praxis tritt jedoch häufig der Fall auf, daß man zwei Zeichengabepunkte, welche unterschiedliche Netzwerke bedienen, von welchen jedoch wenigstens zwei denselben NI verwenden, miteinander mit einer Zeichengabestrecke bzw. einem Zeichengabestreckenbündel verbinden will, welche bzw. welches von Nachrichten aller Netzwerke verwendet werden soll. Ein solcher Fall tritt z.B. auf wenn ein internationaler Netzbetreiber in Europa zwei oder mehr sog. Nachrichtentransferpunkte (Signalling Transfer Points, STP) betreiben will, die er einerseits als STP im internationalen Netz, andererseits aber auch als STP für wenigstens zwei nationalen Netzen verwenden will (Figur 4). (Anmerkung: STP dienen dazu, Zeichengabenachrichten von einem Zeichengabepunkt zu einem anderen Zeichengabepunkt weiterzuleiten.) Da für nationale Netze im wesentlichen, wie oben ausgeführt, ein bestimmter NI Wert verwendet wird, andererseits aber eine unabhängige Vergabe der Signallingpointcodes erfolgt, ist es für den Betreiber der STP zwingend notwendig, das oben erwähnte Multiple-Network-Konzept zu verwenden, wenn es nicht zu Problemen in der Adressierung (wenn unterschiedliche Zeichengabepunkte in unterschiedlichen nationalen Zeichengabenetzen die gleichen Signallingpointcodes verwenden) kommen soll. Für Ersatzschaltefälle muß es möglich sein, zwischen den beiden STP in jedem der betroffenen Zeichengabenetze Nachrichten auszutauschen. Um dies nun auch für Netzwerke, welche den gleichen NI Wert benutzen, über ein einziges Zeichengabestreckenbündel zu bewerkstelligen, wird wie folgt verfahren:
- Die Zuordnung der internen Netzwerkidentität zu einer Nachricht erfolgt in Abhängigkeit von dem in der Nachricht enthaltenen NI und dem Zeichengabestreckenbündel, worüber die Nachricht erhalten wurde.
- Die Zuordnung des NI zu einer zu sendenden Nachricht erfolgt in Abhängigkeit von der internen Netzwerkidentität und dem Zeichengabestreckenbündel, worüber die Nachricht zu senden ist.
- Dabei muß der NI einer auf einem Zeichengabestreckenbündel erhaltenen Nachricht nicht mehr dem NI entsprechen, mit dem die Nachricht auf einem anderen Zeichengabestreckenbündel ausgesendet wird.
- Nachrichten von unterschiedlichen Netzwerken werden zur Übertragung über den gemeinsamen Linkset unterschiedliche NI zugeordnet.
Dieses Verfahren wird nun wie folgt auf das Beispiel in Figur 4 angewandt, wenn die beiden nationalen Netzwerke N1 und N2 beide den NI=10 verwenden:
- Wenn STP A eine Nachricht von den Zeichengabebündeln erhält, welche mit dem nationalen Netz N1 verbunden sind, wird diese Nachricht dem internen Netzwerk I1 zugeordnet.
- Wenn STP A eine Nachricht von den Zeichengabebündeln erhält, welche mit dem nationalen Netz N2 verbunden sind, wird diese Nachricht dem internen Netzwerk I2 zugeordnet.
- Wenn STP A eine Nachricht von dem Zeichengabestreckenbündel erhält, welches STP A mit STP B verbindet, wird diese Nachricht dem internen Netzwerk I1 zugeordnet, wenn sie den NI=10 besitzt. Jedoch wird sie dem internen Netzwerk I2 zugeordnet wenn sie den NI=11 besitzt. Ist der NI=00, wird die Nachricht dem internen Netz I0 zugeordnet.
- Wenn von STP A eine Nachricht des internen Netzes I1 über das Zeichengabestreckenbündel, welches STP A mit STP B verbindet, gesendet wird, erhält sie den NI=10, eine des internen Netzes I2 erhält in diesem Fall jedoch den NI=11.
- Alle Nachrichten, welche über die Zeichengabestreckenbündel zu den nationalen Netzen N1 bzw. N2 gesendet werden, erhalten den NI=10. Alle Nachrichten des internen Netzes I0 haben immer den NI=00.
- In STP B wird analog verfahren.
Insbesondere sieht man also, daß Nachrichten des Netzes N2 zwischen STP A und STP B mit NI=11 und nicht mit NI=10 ausgetauscht werden. Dadurch wird es möglich, sie von Nachrichten des Netzes N1 zu unterscheiden, welche auch zwischen STP A und STP B mit NI=10 ausgetauscht werden (Figur 5).

Wenn nun die beiden STP in unserem Beispiel in mehr als vier Netzen zum Einsatz kommen, was durch die Liberalisierung des Telekommunikationsmarktes in Europa praktisch durchaus relevant ist, sind vier NI Werte nicht mehr ausreichend, um auf dem Zeichengabestreckenbündel zwischen A und B die Nachrichten eindeutig den verschiedenen Netzen zuzuordnen. Dieser Fall kann einerseits dadurch gelöst werden, daß man mehr als ein Zeichengabestreckenbündel zwischen A und B einrichtet, von denen dann jedes den Verkehr von bis zu vier Netzen transportieren kann. Alternativ kann man jedoch so vorgehen, daß man auf der Strecke A-B die beiden zusätzlichen Bits des Subservice-Feldes (Figur 1) verwendet, um bis zu 16 unterschiedliche Netze zu unterscheiden.

Selbstverständlich kann diese Methode auch auf Anordnungen von mehr als zwei, untereinander direkt oder indirekt verbundene Zeichengabepunkte mit Transferfunktion ausgedehnt werden. Dabei heißen zwei Zeichengabepunkte direkt miteinander verbunden, wenn sie direkt mit einer Zeichengabestrecke bzw. einem Zeichengabestreckenbündel miteinander verbunden sind. Sie heißen indirekt miteinander verbunden, wenn sie über wenigstens einen weiteren Zeichengabepunkt mit Transferfunktion in Verbindung stehen.

## Patentansprüche

1. Signalisierungs-System in einem Zeichengabepunkt, mit einer Zuordnungsfunktion, welche eine erhaltene Nachricht aufgrund der Zeichengabestrecke bzw. des Zeichengabestreckenbündels, auf der bzw. auf dem die Nachricht erhalten wurde, intern einem Netzwerk bzw. Adreßraum zuordnet und welche eine intern zu einem Netzwerk bzw. Adreßraum zugeordnete Nachricht vor dem Aussenden mit einen Netzwerkindikator (NI) **kennzeichnet,**
**dadurch gekennzeichnet, daß**
- die genannte interne Zuordnung einer erhaltenen Nachricht zu einem Netzwerk bzw. Adreßraum auch von dem in der Nachricht enthaltenen Netzwerkindikator abhängt und daß
- die Kennzeichnung einer zu sendenden Nachricht von der genannten internen Zuordnung zu einem Netzwerk bzw. Adreßraum und der ausgewählten Zeichengabestrecke bzw. dem ausgewählten Zeichengabestreckenbündel abhängt.

2. Signalisierungs-System nach Anspruch 1,
**dadurch gekennzeichnet, daß**
es die genannte interne Zuordnung einer erhaltenen Nachricht zu einem Netzwerk und die Kennzeichnung der wieder auszusendenden Nachricht so vornimmt, daß zumindest für gewisse Nachrichten und gewisse Zeichengabestrecken bzw. Zeichengabestreckenbündel eine Nachricht beim Aussenden einen Netzwerkindikator erhält, der sich von dem Netzwerkindikator unterscheidet, mit dem sie empfangen wurde.

3. Signalisierungs-System nach Anspruch 1 oder 2,
**dadurch gekennzeichnet, daß**
das System wenigstens eine Zeichengabestrecke bzw. ein Zeichengabestreckenbündel gleichzeitig zum Empfang und/oder zur Übertragung von Nachrichten unterschiedlicher Netzwerke verwendet, wobei die Zugehörigkeit der Nachrichten auf den genannten Zeichengabestrecken bzw. Zeichengabestreckenbündel zu einem bestimmten Netzwerk anhand des Netzwerkindikators festgelegt wird.

4. Signalisierungs-System nach Anspruch 3,
**dadurch gekennzeichnet, daß**
- das System Nachrichten von wenigstens zwei unterschiedlichen Netzwerken bzw. Adreßräumen jedoch mit gleichem Netzwerkindikator erhält;
- Nachrichten mit gleichem Netzwerkindikator aber von unterschiedlichen Netzwerken bzw. Adreßräumen über unterschiedliche Zeichengabestrecken bzw. Zeichengabestreckenbündel empfangen werden;
- besagte mit gleichem Netzwerkindikator empfangene Nachrichten von wenigstens zwei unterschiedlichen Netzwerken bzw. Adreßräumen wenigstens teilweise über wenigstens eine gemeinsame Zeichengabestrecke bzw. ein gemeinsames Zeichengabestreckenbündel ausgesandt werden.

5. Signalisierungs-System nach Anspruch 3 oder 4,
**dadurch gekennzeichnet, daß**
- das System Nachrichten mit unterschiedlichem Netzwerkindikator für wenigstens zwei unterschiedliche Netzwerke bzw. Adreßräume über wenigstens eine gemeinsame Zeichengabestrecke bzw. ein gemeinsames Zeichengabestreckenbündel erhält;
- von den besagten, mit unterschiedlichem Netzwerkindikator von wenigstens zwei unterschiedlichen Netzwerken bzw. Adreßräumen über wenigstens eine gemeinsame Zeichengabestrecke bzw. ein gemeinsames Zeichengabestreckenbündel empfangenen Nachrichten die Nachrichten von wenigstens zwei Netzwerken bzw. Adreßräumen teilweise oder ganz über wenigstens eine gemeinsame Zeichengabestrecke bzw. ein gemeinsames Zeichengabestreckenbündel mit unterschiedlichem Netzwerkindikator und/oder teilweise oder ganz mit identischem Netzwerkindikator über unterschiedliche Zeichengabestrecken bzw. Zeichengabestreckenbündel ausgesandt werden.

6. Signalisierungs-System nach Anspruch 1, 2, 3, 4 oder 5,
**dadurch gekennzeichnet, daß**
das verwendete Signalisierungs-System auf dem Zeichengabesystem Nr. 7 der ITU basiert.

7. Signalisierungs-System nach Anspruch 6,
**dadurch gekennzeichnet, daß**
das Signalisierungs-System auf wenigstens einer Zeichengabestrecke oder einem Zeichengabestreckenbündel als Netzwerkindikator die Bits D und C und zusätzlich noch wenigstens eines der beiden freien Bits B und A des Subservice Feldes zur Unterscheidung von zu unterschiedlichen Netzwerken gehörenden Nachrichten verwendet.

8. Anordnung von wenigstens zwei Zeichengabepunkten mit Signalisierungs-Systemen nach Anspruch 1, 2, 3, 4, 5, 6 oder 7, wobei
- diese wenigstens zwei Zeichengabepunkte wenigstens zwei Netzwerken bzw. Adreßräumen angehören bzw. Nachrichten für besagte Netzwerke weiterleiten;
- wenigstens jeweils ein Signalisierungs-System in besagten Netzwerken bzw. Adreßräumen Nachrichten an oben benannte Zeichengabepunkte für besagte unterschiedliche Netzwerke mit identischem Netzwerkindikator zur Weiterleitung sendet;
- besagte Zeichengabepunkte in den besagten Netzwerken bzw. Adreßräumen als Zeichengabepunkte mit Transferfunktion eingesetzt werden;
- besagte Zeichengabepunkte in den besagten Netzwerken bzw. Adreßräumen direkt oder indirekt durch Zeichengabestrecken bzw. Zeichengabestreckenbündel miteinander verbunden sind;
- wenigstens eine bzw. einer der besagten Zeichengabestrecken bzw. Zeichengabestreckenbündel zur Übertragung von Verkehr besagter wenigstens zwei Netzwerke bzw. Adreßräume, für welche Nachrichten mit identischem Netzwerkindikator erhalten werden, verwendet wird.

9. Verfahren zur Signalisierung in einem Zeichengabepunkt, demgemäß eine erhaltene Nachricht aufgrund der Zeichengabestrecke bzw. des Zeichengabestreckenbündels, auf der bzw. auf dem die Nachricht erhalten wurde, intern einem Netzwerk bzw. Adreßraum zugeordnet wird und eine intern zu einem Netzwerk bzw. Adreßraum zugeordnete Nachricht vor dem Aussenden mit einen Netzwerkindikator **gekennzeichnet** wird,
**dadurch gekennzeichnet, daß**
- die genannte interne Zuordnung einer erhaltenen Nachricht zu einem Netzwerk bzw. Adreßraum auch von dem in der Nachricht enthaltenen Netzwerkindikator abhängt und daß
- die Kennzeichnung einer zu sendenden Nachricht von der genannten internen Zuordnung zu einem Netzwerk bzw. Adreßraum und der ausgewählten Zeichengabestrecke bzw. dem ausgewählten Zeichengabestreckenbündel abhängt.

10. Verfahren zur Signalisierung nach Anspruch 9,
**dadurch gekennzeichnet, daß**
die genannte interne Zuordnung einer erhaltenen Nachricht zu einem Netzwerk und die Kennzeichnung der wieder auszusendenden Nachricht so vorgenommen wird, daß zumindest für gewisse Nachrichten und gewisse Zeichengabestrecken bzw. Zeichengabestreckenbündel eine Nachricht beim Aussenden einen Netzwerkindikator erhält, der sich von dem Netzwerkindikator unterscheidet, mit dem sie empfangen wurde.

11. Verfahren zur Signalisierung nach Anspruch 9 oder 10,
**dadurch gekennzeichnet, daß**
das wenigstens eine Zeichengabestrecke bzw. ein Zeichengabestreckenbündel gleichzeitig zum Empfang und/oder zur Übertragung von Nachrichten unterschiedlicher Netzwerke verwendet wird, wobei die Zugehörigkeit der Nachrichten auf den genannten Zeichengabestrecken bzw. Zeichengabestreckenbündel zu einem bestimmten Netzwerk anhand des Netzwerkindikators festgelegt wird.

12. Verfahren zur Signalisierung nach Anspruch 11,
**dadurch gekennzeichnet, daß**
- Nachrichten von wenigstens zwei unterschiedlichen Netzwerken bzw. Adreßräumen jedoch mit gleichem Netzwerkindikator behandelt werden;
- Nachrichten mit gleichem Netzwerkindikator aber von unterschiedlichen Netzwerken bzw. Adreßräumen über unterschiedliche Zeichengabestrecken bzw. Zeichengabestreckenbündel empfangen werden;
- besagte mit gleichem Netzwerkindikator empfangene Nachrichten von wenigstens zwei unterschiedlichen Netzwerken bzw. Adreßräumen wenigstens teilweise über wenigstens eine gemeinsame Zeichengabestrecke bzw. ein gemeinsames Zeichengabestreckenbündel ausgesandt werden.

13. Verfahren zur Signalisierung nach Anspruch 11 oder 12,
**dadurch gekennzeichnet, daß**
- Nachrichten mit unterschiedlichem Netzwerkindikator für wenigstens zwei unterschiedliche Netzwerke bzw. Adreßräume über wenigstens eine gemeinsame Zeichengabestrecke bzw. ein gemeinsames Zeichengabestreckenbündel empfangen werden;
- von den besagten, mit unterschiedlichem Netzwerkindikator von wenigstens zwei unterschiedlichen Netzwerken bzw. Adreßräumen über wenigstens eine gemeinsame Zeichengabestrecke bzw. ein gemeinsames Zeichengabestreckenbündel empfangenen Nachrichten die Nachrichten von wenigstens zwei Netzwerken bzw. Adreßräumen teilweise oder ganz über wenigstens eine gemeinsame Zeichengabestrecke bzw. ein gemeinsames Zeichengabestreckenbündel mit unterschiedlichem Netzwerkindikator und/oder teilweise oder ganz mit identischem Netzwerkindikator über unterschiedliche Zeichengabestrecken bzw. Zeichengabestreckenbündel ausgesandt werden.

14. Verfahren zur Signalisierung nach Anspruch 9, 10, 11, 12 oder 13,
**dadurch gekennzeichnet, daß**
das verwendete Verfahren auf dem Zeichengabesystem Nr. 7 der ITU basiert.

15. Verfahren zur Signalisierung nach Anspruch 12,
**dadurch gekennzeichnet, daß**
das Verfahren auf wenigstens einer Zeichengabestrecke oder einem Zeichengabestreckenbündel als Netzwerkindikator die Bits D und C und zusätzlich noch wenigstens eines der beiden freien Bits B und A des Subservice Feldes zur Unterscheidung von zu unterschiedlichen Netzwerken gehörenden Nachrichten verwendet.

## Claims

1. Signalling system in a signalling point, with an assignment function, which assigns a received message internally to a network or address space on the basis of the signalling link or signalling link set, on which the message was received and which identifies a message assigned internally to a network or address space with a network indicator (NI) before being sent,
**characterised in that**
- the said internal assignment of a received message to a network or address space is also a function of the network indicator contained in the message and
- the identification of a message to be sent is a function of the said internal assignment to a network or address space and the selected signalling link or signalling link set.

2. Signalling system according to claim 1,
**characterised in that** it carries out the said internal assignment of a received message to a network and the identification of the message to be sent out again such that when sent a message is given a network indicator that is different from the network indicator with which it was received, at least for certain messages and certain signalling links or signalling link sets.

3. Signalling system according to claim 1 or 2,
**characterised in that** the system uses at least one signalling link or signalling link set simultaneously to receive and/or transmit messages of different networks, with the association of the messages on the said signalling links or signalling link sets to a specific network being specified on the basis of the network indicator.

4. Signalling system according to claim 3,
**characterised in that**
- the system receives messages from at least two different networks or address spaces but with the same network indicator;
- messages with the same network indicator but from different networks or address spaces are received via different signalling links or signalling link sets;
- said messages received with the same network indicator from at least two different networks or address spaces are sent out at least partially via at least one common signalling link or signalling link set.

5. Signalling system according to claim 3 or 4,
**characterised in that**
- the system receives messages with a different network indicator for at least two different networks or address spaces via at least one common signalling link or signalling link set;
- of the said messages received with a different network indicator from at least two different networks or address spaces via at least one common signalling link or signalling link set, the messages from at least two networks or address spaces are sent out partially or wholly via at least one common signalling link or signalling link set with a different network indicator and/or partially or wholly with an identical network indicator via different signalling links or signalling link sets.

6. Signalling system according to claim 1, 2, 3, 4 or 5,
**characterised in that**
the signalling system used is based on the ITU signalling system no. 7.

7. Signalling system according to claim 6,
**characterised in that**
the signalling system on at least one signalling link or signalling link set uses the bits D and C and also at least one of the two free bits B and A of the sub-service field as network indicators to distinguish messages belonging to different networks.

8. Arrangement of at least two signalling points with signalling systems according to claim 1, 2, 3, 4, 5, 6 or 7, with
- these at least two signalling points being associated with at least two networks or address spaces or forwarding messages for the said networks;
- at least one signalling system in each instance in the said networks or address spaces sending messages to the above-mentioned signalling points for forwarding for the said different networks with an identical network indicator;
- the said signalling points being used in the said networks or address spaces as signalling points with a transfer function;
- the said signalling points being connected together in the said networks or address spaces directly or indirectly by means of signalling links or signalling link sets;
- at least one of the said signalling links or signalling link sets being used to transmit traffic of the said at least two networks or address spaces, for which messages are received with an identical network indicator.

9. Method for signalling in a signalling point, according to which a received message is assigned internally to a network or address space on the basis of the signalling link or signalling link set, on which the message was received, and a message assigned internally to a network or address space is identified with a network indicator before being sent,
**characterised in that**
- the said internal assignment of a received message to a network or address space is also a function of the network indicator contained in the message and
- the identification of a message to be sent is a function of the said internal assignment to a network or address space and the selected signalling link or signalling link set.

10. Method for signalling according to claim 9,
**characterised in that**
the said internal assignment of a received message to a network and the identification of the message to be sent out again is carried out such that when sent a message is given a network indicator that is different from the network indicator with which it was received, at least for certain messages and certain signalling links or signalling link sets.

11. Method for signalling according to claim 9 or 10,
**characterised in that**
the at least one signalling link or signalling link set is used simultaneously to receive and/or transmit messages of different networks, with the association of the messages on the said signalling links or signalling link sets to a specific network being specified on the basis of the network indicator.

12. Method for signalling according to claim 11,
**characterised in that**
- messages from at least two different networks or address spaces but with the same network indicator are handled;
- messages with the same network indicator but from different networks or address spaces are received via different signalling links or signalling link sets;
- said messages received with the same network indicator from at least two different networks or address spaces are sent out at least partially via at least one common signalling link or signalling link set

13. Method for signalling according to claim 11 or 12,
**characterised in that**
- messages are received with a different network indicator for at least two different networks or address spaces via at least one common signalling link or signalling link set;
- of the said messages received with a different network indicator from at least two different networks or address spaces via at least one common signalling link or signalling link set, the messages from at least two networks or address spaces are sent out partially or wholly via at least one common signalling link or signalling link set with a different network indicator and/or partially or wholly with an identical network indicator via different signalling links or signalling link sets

14. Method for signalling according to claim 9, 10, 11, 12 or 13,
**characterised in that**
the method used is based on the ITU signalling system no. 7.

15. Method for signalling according to claim 12,
**characterised in that**
the method on at least one signalling link or signalling link set uses the bits D and C and also at least one of the two free bits B and A of the sub-service field as network indicators to distinguish messages belonging to different networks.

## Revendications

1. Système de signalisation dans un point de signalisation, doté d'une fonction d'affectation, laquelle affecte de manière interne à un réseau resp. à un espace d'adresse un message reçu, en raison du canal de signalisation resp. du faisceau de canaux de signalisation sur lequel le message a été reçu, et laquelle caractérise un message affecté de manière interne à un réseau resp. à un espace d'adresse au moyen d'un indicateur de réseau (NI) avant son émission,
**caractérisé en ce que**
- ladite affectation interne d'un message reçu à un réseau resp. à un espace d'adresse dépend aussi de l'indicateur de réseau contenu dans le message et **en ce que**
- la caractérisation d'un message à émettre dépend de ladite affectation interne à un réseau resp. à un espace d'adresse et du canal de signalisation sélectionné resp. du faisceau de canaux de signalisation sélectionné.

2. Système de signalisation selon la revendication 1,
**caractérisé en ce qu'**
il exécute ladite affectation interne d'un message reçu à un réseau ainsi que la caractérisation du message à émettre de nouveau, de telle manière qu'au moins pour certains messages et certains canaux de signalisation resp. certains faisceaux de canaux de signalisation, un message obtient lors de son émission un indicateur de réseau qui se distingue de l'indicateur de réseau avec lequel il a été reçu.

3. Système de signalisation selon la revendication 1 ou 2,
**caractérisé en ce que**
le système utilise au moins un canal de signalisation resp. un faisceau de canaux de signalisation simultanément pour la réception et/ou la transmission de messages de différents réseaux, l'appartenance à un réseau déterminé des messages sur ledit canal de signalisation resp. sur ledit faisceau de canaux de signalisation étant définie à l'aide de l'indicateur de réseau.

4. Système de signalisation selon la revendication 3,
**caractérisé en ce que**
- le système reçoit des messages d'au moins deux réseaux différents resp. deux espaces d'adresse différents, cependant avec le même indicateur de réseau ;
- des messages ayant le même indicateur de réseau mais provenant de différents réseaux resp. de différents espaces d'adresse sont reçus par l'intermédiaire de différents canaux de signalisation resp. de différents faisceaux de canaux de signalisation ;
- lesdits messages reçus avec le même indicateur de réseau sont émis par au moins deux réseaux différents resp. deux espaces d'adresse différents au moins en partie par l'intermédiaire d'au moins un canal de signalisation commun resp. d'au moins un faisceau commun de canaux de signalisation.

5. Système de signalisation selon la revendication 3 ou 4,
**caractérisé en ce que**
- le système reçoit des messages ayant un indicateur de réseau différent pour au moins deux réseaux différents resp. deux espaces d'adresse différents par l'intermédiaire d'au moins un canal de signalisation commun resp. d'au moins un faisceau commun de canaux de signalisation ;
- parmi lesdits messages, ayant un indicateur de réseau différent, reçus d'au moins deux réseaux différents resp. deux espaces d'adresse différents par l'intermédiaire d'au moins un canal de signalisation commun resp. d'au moins un faisceau commun de canaux de signalisation, les messages d'au moins deux réseaux resp. d'au moins deux espaces d'adresse sont émis en partie ou entièrement par l'intermédiaire d'au moins un canal de signalisation commun resp. d'au moins un faisceau commun de canaux de signalisation avec un indicateur de réseau différent et/ou en partie ou entièrement avec un indicateur de réseau identique par l'intermédiaire de canaux de signalisation différents resp. de faisceaux de canaux de signalisation différents.

6. Système de signalisation selon la revendication 1, 2, 3, 4 ou 5,
**caractérisé en ce que**
le système de signalisation utilisé est basé sur le système de signalisation n° 7 de la recommandation ITU.

7. Système de signalisation selon la revendication 6,
**caractérisé en ce que**
le système de signalisation, sur au moins un canal de signalisation ou un faisceau de canaux de signalisation, utilise les bits D et C en tant qu'indicateur de réseau et en plus encore au moins l'un des deux bits libres B et A du champ de sous-service pour différencier des messages appartenant à différents réseaux.

8. Dispositif d'au moins deux points de signalisation dotés de systèmes de signalisation selon la revendication 1, 2, 3, 4, 5, 6 ou 7,
- ces au moins deux points de signalisation appartenant au moins à deux réseaux resp. à deux espaces d'adresse, resp. transmettant des messages pour lesdits réseaux ;
- au moins un système de signalisation émettant à chaque fois dans lesdits réseaux resp. espaces d'adresse des messages aux points de signalisation mentionnés plus haut pour lesdits différents réseaux avec un indicateur de réseau identique pour le transfert des messages ;
- lesdits points de signalisation dans lesdits réseaux resp. espaces d'adresse étant utilisés en tant que points de signalisation avec fonction de transfert ;
- lesdits points de signalisation dans lesdits réseaux resp. espaces d'adresse étant connectés entre eux directement ou indirectement au moyen des canaux de signalisation resp. des faisceaux de canaux de signalisation ;
- au moins l'un desdits canaux de signalisation resp. faisceaux de canaux de signalisation étant utilisé pour la transmission de trafic desdits au moins deux réseaux resp. espaces d'adresse, pour lesquels des messages ayant un indicateur de réseau identique sont reçus.

9. Procédé de signalisation dans un point de signalisation, selon lequel un message reçu est affecté de manière interne à un réseau resp. à un espace d'adresse, en raison du canal de signalisation resp. du faisceau de canaux de signalisation sur lequel le message a été reçu, et selon lequel un message affecté de manière interne à un réseau resp. à un espace d'adresse est **caractérisé** au moyen d'un indicateur de réseau avant son émission,
**caractérisé en ce que**
- ladite affectation interne d'un message reçu à un réseau resp. à un espace d'adresse dépend aussi de l'indicateur de réseau contenu dans le message et **en ce que**
- la caractérisation d'un message à émettre dépend de ladite affectation interne à un réseau resp. à un espace d'adresse et du canal de signalisation sélectionné resp. du faisceau de canaux de signalisation sélectionné.

10. Procédé de signalisation selon la revendication 9,
**caractérisé en ce que**
ladite affectation interne d'un message reçu à un réseau et la caractérisation du message à émettre à nouveau sont exécutées de telle manière qu'au moins pour certains messages et certains canaux de signalisation resp. pour certains faisceaux de canaux de signalisation, un message obtient lors de son émission un indicateur de réseau qui se distingue de l'indicateur de réseau avec lequel il a été reçu.

11. Procédé de signalisation selon la revendication 9 ou 10,
**caractérisé en ce que**
l'au moins un canal de signalisation resp. l'au moins un faisceau de canaux de signalisation est simultanément utilisé pour la réception et/ou la transmission de messages de différents réseaux, l'appartenance à un réseau déterminé des messages sur ledit canal de signalisation resp. sur ledit faisceau de canaux de signalisation étant définie à l'aide de l'indicateur de réseau.

12. Procédé de signalisation selon la revendication 11,
**caractérisé en ce que**
- des messages d'au moins deux réseaux différents resp. d'au moins deux espaces d'adresse différents ayant cependant le même indicateur de réseau sont traités ;
- des messages ayant le même indicateur de réseau mais provenant de différents réseaux resp. de différents espaces d'adresse sont reçus par l'intermédiaire de différents canaux de signalisation resp. de différents faisceaux de canaux de signalisation ;
- lesdits messages reçus avec le même indicateur de réseau sont émis par au moins deux réseaux différents resp. deux espaces d'adresse différents au moins en partie par l'intermédiaire d'au moins un canal de signalisation commun resp. d'au moins un faisceau commun de canaux de signalisation.

13. Procédé de signalisation selon la revendication 11 ou 12,
**caractérisé en ce que**
- des messages ayant un indicateur de réseau différent sont reçus pour au moins deux réseaux différents resp. deux espaces d'adresse différents par l'intermédiaire d'au moins un canal de signalisation commun resp. d'au moins un faisceau commun de canaux de signalisation ;
- parmi lesdits messages, ayant un indicateur de réseau différent, reçus d'au moins deux réseaux différents resp. d'au moins deux espaces d'adresse différents par l'intermédiaire d'au moins un canal de signalisation commun resp. d'au moins un faisceau commun de canaux de signalisation, les messages d'au moins deux réseaux resp. d'au moins deux espaces d'adresse sont émis en partie ou entièrement par l'intermédiaire d'au moins un canal de signalisation commun resp. d'au moins un faisceau commun de canaux de signalisation avec un indicateur de réseau différent et/ou en partie ou entièrement avec un indicateur de réseau identique par l'intermédiaire de canaux de signalisation différents resp. de faisceaux de canaux de signalisation différents.

14. Procédé de signalisation selon la revendication 9, 10, 11, 12 ou 13,
**caractérisé en ce que**
le procédé utilisé est basé sur le système de signalisation n° 7 de la recommandation ITU.

15. Procédé de signalisation selon la revendication 12,
**caractérisé en ce que**
le procédé, sur au moins un canal de signalisation ou un faisceau de canaux de signalisation, utilise les bits D et C en tant qu'indicateur de réseau et en plus encore au moins l'un des deux bits libres B et A du champ de sous-service pour différencier des messages appartenant à différents réseaux.
